# EUROPEAN PATENT APPLICATION

(11) **EP 4 738 479 A1**
(43) Date of publication of application: **06.05.2026**
(21) Application number: 24209974.5
(22) Date of filing: 30.10.2024
(51) Int. Cl.: H01M 4/88, H01M 8/10

(54) **METHOD FOR PRODUCING A CATALYST LAYER BY MEANS OF AN INK SUBJECTED TO CONTINUOUS REMOVAL OF CONTAMINANT PARTICLES**

(71) Applicant: Johnson Matthey Hydrogen Technologies Limited, London EC2V 7AD (GB)
(72) Inventor: The designation of the inventor has not yet been filed
(74) Representative: Johnson Matthey Public Limited Company

(57) **Abstract**

According to the present invention there is provided a method of producing a catalyst-containing layer for a fuel cell or electrolyser. The method comprising the steps of:
providing a flow of ink, the ink comprising catalyst particles, an ion-conducting polymer and a liquid medium;
conveying the flow of the ink through a density separator configured to separate contaminant particles from the flow of ink, wherein the contaminant particles are more dense than the catalyst particles; and then
coating the ink onto a substrate.

## Description

### Field of the Invention

This invention relating to a method of producing a catalyst-containing layer, such as an electrocatalyst layer, for an electrochemical device, such as a fuel cell or electrolyser. The invention also relates to methods of producing catalyst-coated membranes, gas diffusion electrodes, and membrane electrode assemblies.

### Background of the Invention

A fuel cell is an electrochemical cell comprising two electrodes separated by an electrolyte. A fuel, e.g. hydrogen, an alcohol such as methanol or ethanol, or formic acid, is supplied to the anode and an oxidant, e.g. oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

Fuel cells are usually classified according to the nature of the electrolyte employed. Often the electrolyte is a solid polymeric membrane, in which the membrane is electronically insulating but ionically conducting. In the proton exchange membrane fuel cell (PEMFC) the membrane is proton conducting, and protons, produced at the anode, are transported across the membrane to the cathode, where they combine with oxygen to form water.

An electrolyser is an electrochemical device for electrolysing water to produce high purity hydrogen and oxygen. Electrolysers can operate in both alkaline and acidic systems. Those electrolysers that employ a solid proton-conducting polymer electrolyte membrane, or proton exchange membrane (PEM), are known as proton exchange membrane water electrolysers (PEMWEs). Those electrolysers that utilise a solid anion-conducting polymer electrolyte membrane, or anion exchange membrane (AEM), are known as anion exchange membrane water electrolysers (AEMWEs).

A principal component of the fuel cell or water electrolyser is the membrane electrode assembly (MEA). The MEA is typically composed of five layers. The central layer is the polymer ion-conducting membrane. On either side of the ion-conducting membrane there is an electrocatalyst layer, containing an electrocatalyst designed for the specific electrolytic reaction. Finally, adjacent to each electrocatalyst layer there is a gas diffusion layer, and/or a porous transport layer. The gas diffusion layer (or porous transport layer) allows the reactants to reach the electrocatalyst layer and conduct the electric current that is generated by the electrochemical reactions. The gas diffusion layer (or porous transport layer) is porous and electrically conducting.

The electrocatalyst layers generally comprise an electrocatalyst material comprising a metal or metal alloy suitable for an oxidation reaction (e.g. fuel oxidation) or a reduction reaction (e.g. oxygen reduction reaction), depending on whether the layer is to be used at the anode or cathode. The electrocatalyst is typically based on platinum or platinum alloyed with one or more other metals. The platinum or platinum alloy catalyst can be in the form of unsupported nanoparticles (such as metal blacks or other unsupported particulate metal powders) but more conventionally the platinum or platinum alloy is deposited as higher surface area nanoparticles onto a high surface area conductive carbon material, such as a carbon black or heat treated versions thereof. Anode catalysts for PEMWEs typically comprise iridium or iridium oxide (IrOx) materials, or oxides containing both iridium and ruthenium.

The electrocatalyst layers also generally comprise a proton conducting material, such as a proton conducting polymer, to aid transfer of protons from the anode catalyst to the membrane and or from the membrane to the cathode catalyst.

The MEA can be constructed by a number of known methods. A common method involves depositing one or both of the catalyst layers on a decal transfer substrate and transferring the catalyst layers to either side of the ion-conducting membrane. Subsequently, a gas diffusion layer (or porous transport layer) is applied to the electrocatalyst layer. Alternatively, a catalyst layer can be applied to a gas diffusion layer (or porous transport layer) to form a gas diffusion electrode (or porous transport electrode), which is then combined with the ion-conducting membrane. As a further alternative, catalyst layers can be coated directly onto either side of an ion-conducting membrane. A membrane electrode assembly can be prepared by any combination of these methods e.g., one catalyst layer is applied to the ion-conducting membrane to form a catalyst-coated ion-conducting membrane, and the other catalyst layer is applied as a gas diffusion electrode.

The catalyst layers can be deposited using a catalyst ink which typically comprises an electrocatalyst, an ion-conducting polymer, solvents/dispersants and/or diluents, and any agents or additives desired to be included in the electrocatalyst layer. Known printing techniques, such as slot die, spray coating, screen printing, inkjet printing and gravure, require the catalyst inks to have strict physical properties (e.g. rheology) in order to manufacture acceptable catalyst layers, for example, with a uniform layer thickness and loading without cracks or defects.

Undesirably, some particles dispersed in the ink may deposit inside the ink processing apparatus. It is therefore necessary to perform regular extended cleans of the ink processing apparatus, which can lead to significant machine downtime and reduces manufacturing throughput.

### Summary of the Invention

The present invention seeks to address at least some of the above-described problems, desires and needs. In particular, the present invention seeks to reduce machine downtime due to extended cleans of the apparatus, and thereby increase manufacturing throughput and maintain production of high-quality catalyst-containing layers. The method of the present disclosure can selectively separate dense particles from a catalyst-containing ink without otherwise materially affecting the properties of the ink. As such, the accumulation of particulate deposits in the ink processing and coating apparatus is reduced, which in turn reduces the need to perform extended cleans of said apparatus as frequently. Additionally, methods of the present invention were surprisingly found to improve catalyst layer quality and performance.

Accordingly, there is provided a method of producing a catalyst-containing layer for an electrochemical device, such as a fuel cell or an electrolyser, the method comprising the steps of:
providing a flow of ink, the ink comprising catalyst particles, an ion-conducting polymer and a liquid medium;
conveying the flow of ink through a density separator configured to separate contaminant particles from the flow of ink, wherein the contaminant particles are more dense than the catalyst particles; and then
coating the ink onto a substrate.

The flow of ink can have a substantially laminar flow while flowing through the density separator.

The flow of ink can have a first flow speed prior to entering the density separator, and a second flow speed while the ink flows through the density separator, wherein the second flow speed is slower than the first flow speed.

The density separator can comprise a settling chamber. Preferably, the density separator comprises a gravitational settling chamber.

The density separator can comprise an expansion chamber. The density separator can comprise an inlet region and a separation region, wherein the separation region has a larger cross-sectional area than the inlet region. The inlet region can comprise an increasing cross-sectional area (in a flow direction), for example a gradually increasing cross-sectional area. The density separator can further comprise an outlet region, wherein the separation region has a larger cross-sectional area than the outlet region. The outlet region can comprise a decreasing cross-sectional area (in a flow direction), for example a gradually decreasing cross-sectional area.

The flow of ink can be conveyed through the density separator a plurality of times prior to the step of coating the ink onto the substrate. Preferably, the flow of ink is conveyed through the density separator at least 5 times, more preferably at least 10 times, and more preferably at least 15 times. The flow of ink can be conveyed through the density separator fewer than 50 times, preferably fewer than 30 times.

The method can further comprise milling the ink using a milling apparatus, and then conveying the flow of ink from the milling apparatus to the density separator. The ink is suitably conveyed from the milling apparatus to the density separator via a (fluid) conduit, e.g. tubing or pipe. The method can comprise recirculating the flow of ink through the milling apparatus via the density separator. The flow of ink can be conveyed from the density separator to the milling apparatus via a (fluid) conduit, e.g. tubing or pipe.

The substrate can be an ion-conducting membrane, preferably a polymer electrolyte membrane. Preferably, the polymer electrolyte membrane is a proton exchange membrane. The substrate can be a gas diffusion layer or a porous transport layer. The substrate can be a decal transfer substrate or a carrier sheet.

The catalyst-containing layer can be an electrocatalyst layer.

The method can further comprise the subsequent step(s) of:
(a) applying an ion-conducting membrane to the catalyst-containing layer; and/or
(b) applying a gas diffusion layer or a porous transport layer to the catalyst-containing layer.

In a second aspect there is provided a continuous milling system comprising:
a milling apparatus for milling an ink comprising catalyst particles, an ion-conducting polymer, and a liquid medium;
a density separator; and
a recirculation loop for recirculating a flow of the ink through the milling device via the density separator,
wherein the density separator is configured to separate contaminant particles from the flow of ink, wherein the contaminant particles are more dense than the catalyst particles.

In a third aspect there is provided an ink coating system for producing a catalyst-containing layer, the ink coating system comprising:
an ink container for an ink;
a density separator configured to separate contaminant particles from a flow of ink, wherein the contaminant particles are more dense than the catalyst particles; and
a coating device comprising an ink dispenser for depositing the catalyst ink onto a substrate;
wherein the density separator is fluidly connected to the ink container and downstream of the ink container, and the coating device is fluidly connected to the density separator and downstream of the density separator.

### Brief Description of the Drawings

Figure 1 is a schematic cross-sectional view of a density separator;
Figure 2 is a schematic view of a continuous milling system;
Figure 3 is a schematic view of an ink coating system; and
Figure 4 is a schematic view of an ink processing system in accordance with the examples.

### Detailed Description of the Invention

Preferred and/or optional features of the invention will now be set out. Any of the preferred and/or optional features of any aspect may be combined, either singly or in combination, with any other preferred and/or optional features of any aspect of the invention unless the context demands otherwise.

The present invention provides a method for manufacturing a catalyst-containing layer for an electrochemical device, such as a fuel cell or electrolyser, and in particular for a polymer electrolyte membrane (PEM) fuel cell or PEM water electrolyser. Preferably, the catalyst-containing layer is an electrocatalyst layer.

The method comprises providing a flow of ink, the ink comprising catalyst particles, an ion-conducting polymer and a liquid medium;
conveying the flow of the ink through a density separator configured to separate contaminant particles from the flow of ink, wherein the contaminant particles are more dense than the catalyst particles; and then
coating the ink onto a substrate.

### Ink

The ink is a catalyst-containing ink for an electrochemical device. The ink comprises catalyst particles, an ion-conducting polymer and a liquid medium. The ink may comprise further additives, such as fibrous additives, as is known in the art. Undesirably, the ink may also comprise contaminant particles.

### Catalyst particles

The catalyst particles comprise a catalyst. The catalyst may be selected depending on its intended use. For example, the catalyst may be an electrocatalyst for use in a cathode or an anode of a fuel cell or water electrolyser. The catalyst is suitably an electrocatalyst. For example, the electrocatalyst can be a hydrogen oxidation reaction (HOR) electrocatalyst, an oxygen reduction reaction (ORR) electrocatalyst, a hydrogen evolution reaction (HER) electrocatalyst, or an oxygen evolution reaction (OER) electrocatalyst.

The catalyst comprises catalytic particles (e.g. metal particles) optionally supported on a catalyst support, such as an electrically conductive support. The catalyst can be unsupported metal particles (e.g. finely divided unsupported metal powder) or may be a supported catalyst wherein metal particles (e.g. nanoparticles) are dispersed on an electrically conductive support, such as an electrically conducting particulate carbon support. The metal particles of the catalyst are suitably selected from:
(i) the platinum group metals (i.e. platinum, palladium, rhodium, ruthenium iridium, and osmium);
(ii) gold or silver,
(iii) a base metal, or
(iv) an alloy or mixture comprising one or more of these metals or their oxides.

Preferably, the metal in the metal particles of the catalyst is a platinum group metal or an alloy of a platinum group metal. A preferred catalyst material is platinum, which may be alloyed with other precious metals or base metals. Another preferred catalyst material is iridium, which may be alloyed with other precious metals or base metals. A base metal is tin or a transition metal which is not a noble metal. A noble metal is a platinum group metal, silver or gold. Suitable base metals include copper, cobalt, nickel, zinc, iron, titanium, molybdenum, vanadium, manganese, niobium, tantalum, chromium and tin. Preferred base metals are nickel, copper, cobalt, and chromium. More preferred base metals are nickel, cobalt and copper.

If the catalyst is a supported catalyst, the loading of metal particles on the electrically conductive support material is suitably in the range 10 wt% to 90 wt%, or 20 wt% to 80wt%, based on the weight of the electrocatalyst. The loading of the metal particles can be determined using inductively coupled plasma mass spectrometry (ICPMS).

Preferably, the (electro)catalyst comprises an electrically conductive support and metal particles supported on the electrically conductive support. The term "supported" will be readily understood by a skilled person. For example, it will be understood that the term "supported" includes the metal particles of the electrocatalyst being dispersed on (and/or in the pores of) the support material and bound or fixed to the support material by physical or chemical bonds. For instance, the catalyst may be bound or fixed to the support material by way of ionic or covalent bonds, or non-specific interactions such as van der Waals forces. Where the catalyst comprises a catalyst support, the term "catalyst particle" is used to refer to the discrete entity comprising both the catalytic particles and the catalyst support.

The electrically conductive support may be an electrically conductive carbon support material. Suitably, the electrically conductive carbon support material is a carbon powder which may be, for example, a carbon black or graphitised carbon black for example a commercially available carbon black (such as from Cabot Corp. (Vulcan^{®} XC72R) or Akzo Nobel (the Ketjen^{®} black series)). Another suitable carbon support material is an acetylene black (e.g. those available from Chevron Phillips (Shawinigan Black^{®}) or Denka). The electrically conductive carbon support can be prepared by the method disclosed in WO2013/045894. Alternatively, the electrically conductive support can be a metal oxide or a mixed oxide, in particular a conductive mixed oxide such as niobia-doped titania, phosphorus-doped tin oxide and mixed platinum group metal oxides or mixed metal oxides (as disclosed in WO2012/080726), a carbide (e.g. tungsten carbide, molybdenum carbide or titanium carbide, suitably tungsten carbide or titanium carbide), a nitride, in particular a conductive nitride (e.g. titanium nitride or titanium aluminium nitride).

The catalyst particles suitably have a D₅₀ particle size of less than 20 µm, preferably less than 10 µm, preferably less than 5 µm, and suitably less than 2 µm. The D₅₀ particle size of the catalyst particles can be determined using laser diffraction of a diluted sample of the ink, for example, using a Mastersizer^{™} 3000 (from Malvern Panalytical Limited).

### lonomer

The ion-conducting polymer can be a proton-conducting polymer or an anion-conducting polymer, such as a hydroxyl anion-conducting polymer. Preferably the ion-conducting polymer is a proton-conducting polymer. Typically, the ion-conducting polymer comprises sulfonic acid groups. Suitably, the ion-conducting polymer is a perfluorinated sulfonic acid ionomer, or a partially-fluorinated or non-fluorinated hydrocarbon sulfonic acid ionomer. Examples of suitable proton-conducting polymers include partially- or fully-fluorinated sulphonic acid polymers, such as perfluorosulphonic acid ionomers (e.g. Nation^{®} (Chemours), Aciplex^{®} (Asahi Kasei), Aquivion^{™} (Syensqo), Flemion^{®} (Asahi Glass Co.), and from 3M; or ionomers based on a sulphonated hydrocarbon such as those available from FuMA-Tech GmbH as the fumapem^{®} P, E or K series of products, and others. Examples of suitable anion-conducting polymers include A901 made by Tokuyama Corporation and Fumasep FAA from FuMA-Tech GmbH. Typically, the ion-conducting polymer has an equivalent weight of about 1100 or less, typically about 900 or less, suitably about 850 or less. Typically, the ion-conducting polymer has an equivalent weight of at least about 450. The equivalent weight of the ion-conducting polymer may be readily measured using an acid titration following a hydroxide exchange. For example, a membrane sample may be vacuum dried at about 110 °C for 16 hours to obtain about 2g of the dried film. The film may then be immersed in about 30 mL of a 0.1N NaOH solution to substitute sodium ions for protons in the membrane. Then titration by neutralisation is carried out, for example using 0.1N hydrochloric acid, to determine the number of exchangeable protons, and therefore the EW may be calculated.

### Liquid medium

The liquid medium comprises a solvent or a mixture of solvents. Suitably, the liquid medium comprises a water-alcohol mix. Suitable alcohols are short-chain aliphatic alcohols, such as ethanol and propanol.

Suitably, the catalyst particles and the ionomer are dispersed in the liquid medium. That is, the catalyst ink is a dispersion.

### Contaminant particles

The ink can comprise contaminant particles. The contaminant particles have a higher settling velocity than the catalyst particles. Suitably, the contaminant particles have a higher settling velocity than each of the other ink components (e.g. catalyst particles, ion-conducting polymer etc.).

Preferably, the contaminant particles have a mean average density that is greater than the mean average density of the catalyst particles. Preferably, each of the contaminant particles can have a density that is greater than the mean average density of the catalyst particles. Preferably, the mean average density of the contaminant particles is greater than the density of each of the catalyst particles. Preferably, each of the contaminant particles has a density that is greater than the density of each of the catalyst particles. The term "density" as used herein refers to the "effective density" of the particles. The effective density of a particle can be calculated as the total mass of the particle divided by the total (geometric) volume of the particle. The total mass of the particle includes any mass of fluid (e.g. the liquid medium of the ink) within any pores of the particle.

The contaminant particles suitably have a mean average particle size of at least 1 µm, suitably at least 2 µm, preferably at least 5 µm, suitably at least 10 µm, preferably at least 20 µm, suitably at least 25 µm, suitably at least 50 µm, and suitably at least 100 µm. The mean average particle size of the contaminant particles can be determined using microscopy and directly measuring the largest cross-sectional dimension of a representative number of the collected contaminant particles.

Such contaminant particles can be selectively removed from an ink using an appropriate separating device, such as a density separator. The separating device can be configured to separate the contaminant particles from the ink based on their settling velocity (which is a function of density). For example, the separating device (e.g. density separator) may be configured to separate the contaminant particles from the ink based on their density. As such, the contaminant particles can be selectively separated from the ink without materially affecting the properties and composition of the ink. By separating the dense contaminant particles from the flow of ink, the present inventors have found that the number of deposits forming inside the ink processing equipment decreases. This can extend the period of time between performing extended cleans on the ink processing apparatus. Furthermore, the quality of the catalyst layers was surprisingly improved.

### Density separator

The method comprises using a density separator to separate contaminant particles from a flow of ink.

Suitably the flow of ink has a substantially laminar flow while flowing through the density separator. The flow of ink can have a first velocity prior to entering (i.e. upstream of) the density separator, and the ink can have a second velocity whilst the ink flows through the density separator, wherein the second velocity is slower than the first velocity. Preferably, the second velocity is a non-zero velocity. The flow of ink can have a third velocity after exiting (i.e. downstream of) the density separator. The third velocity can be faster than the second velocity. In some embodiments, the third velocity can be the same as the first velocity, depending on piping/tubing dimensions. The velocity of flow can be controlled by varying the cross-sectional area of the flow path (i.e. of the conduit conveying the flow of ink). For example, increasing the cross-sectional area of the flow path in the density separator (relative to the cross-sectional area of the flow path upstream of the density separator) can reduce the flow velocity while the ink flows through the density separator. Reducing the cross-sectional area of the flow path downstream of the density separator (relative to the cross-sectional area of the flow path in the density separator) can increase the flow velocity after the ink exits the density separator. Preferably, the cross-sectional area of the flow path (i.e. of the conduit conveying the flow of ink) prior to entering the density separator and after exiting the density separator are substantially the same.

The flow of ink has a flow rate. The flow rate of the ink upstream of (i.e. prior to entering) the density separator and while the ink flows through the density separator can be substantially the same. The flow rate of the ink downstream of the density separator and while the ink flows through the density separator can be substantially the same.

The density separator can comprise a settling chamber suitably configured to separate particulate matter from the ink based on settling velocity (which is a function of density). Preferably, the settling chamber is a gravitational settling chamber. The density separator comprises an inlet for receiving a flow of ink, and an outlet. The density separator suitably comprises a particle trap for collecting the contaminant particles. The density separator can comprise an expansion chamber. For example, the settling chamber can be an expansion chamber. The expansion chamber can comprise an expansion zone, and a particle trap. In some embodiments, the density separator can be a continuous flow centrifuge, a hydrocyclone, or other device for separating particles from a flow based on density.

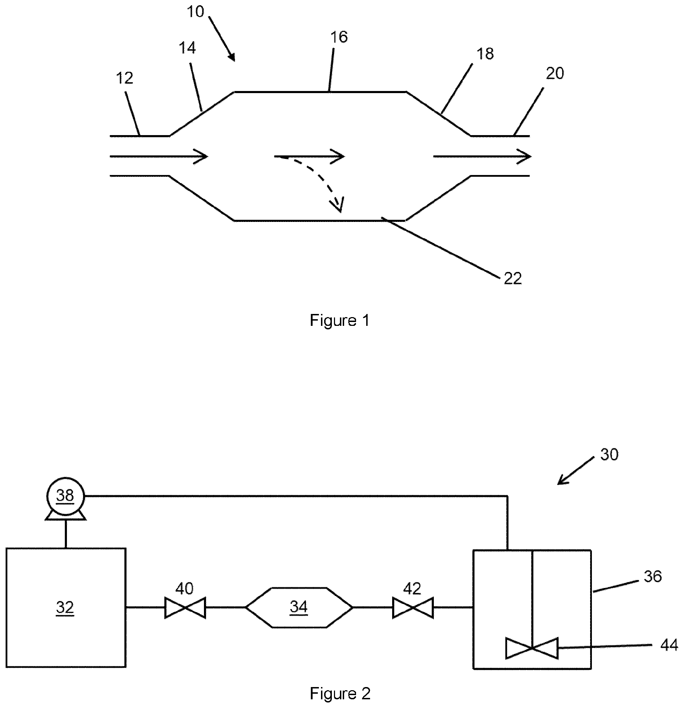

A suitable density separator 10 is shown schematically in Figure 1. The density separator 10 comprises an inlet 12, an expansion zone 14, a settling chamber 16, a contraction zone 18, and an outlet 20. A flow of ink is conveyed through the inlet 12 at a constant flow rate and at a first flow speed (represented by a solid arrow). When the flow of ink reaches the expansion zone 14, the cross-sectional area of the conduit increases causing the ink flow speed to reduce. Preferably, the flow speed reduces so that the ink flow becomes a laminar flow. The slower flow speed in the settling chamber 16 promotes the larger and more dense contaminant particles to settle in the particle trap 22 (as shown by the dashed arrow in Figure 1). The particles collected in the particle trap 22 are removed from the ink flow and do not exit the density separator via the contraction zone 18 and outlet 20. Meanwhile, the desired components of the ink remain in the ink flow and exit the density separator via the contraction zone 18 and outlet 20. The preferred dimensions of the density separator and flow rates are dependent upon the physical properties of the ink (e.g. viscosity) and properties of the contaminant particles to be removed (e.g. density). For example, the flow speed in the settling chamber is preferably slow enough (but not zero) for the flow to be laminar. A non-zero flow speed allows the ink to be processed continuously rather than in batches. A slower flow speed will result in a longer residence time in the settling chamber, which may increase the total ink processing time. On the other hand, if the flow speed in the settling chamber is too high, the contaminant particles may not settle sufficiently to be collected in the particle trap, and hence may not be removed from the ink flow as efficiently.

The density separator is preferably disposed inline in an ink processing apparatus, for example in a milling apparatus or coating apparatus. Preferably, the density separator is disposed in a recirculating ink processing apparatus. Preferably, the density separator is disposed in a continuous milling system. For example, the method can comprise milling the ink using a milling apparatus, and then conveying the flow of ink from the milling apparatus to the density separator. The method can further comprise conveying the flow of ink from the density separator to the milling apparatus. That is, the method can comprise recirculating the flow of ink through the milling apparatus via the density separator. For example, the method can comprise flowing the ink from the milling apparatus through the density separator, and then conveying the flow of ink from the density separator to the milling apparatus through a recirculation (or recycle) loop.

The flow of ink can be conveyed through the density separator a plurality of times prior to the step of coating the ink onto the substrate. The number of times the ink can be conveyed through the density separator is not particularly limited. By way of example only, the flow of ink can be conveyed through the density separator at least 2 times, preferably at least 5 times, and more preferably at least 10 times. The flow of ink can be conveyed through the density separator up to about 50 times, suitably up to about 30 times. The flow of ink can be conveyed through the density separator in a range comprising any of the aforementioned upper and lower limits.

Figure 2 shows a schematic of a continuous milling system 30 comprising a density separator (e.g. of the type described in relation to Figure 1). The milling system 30 comprises a milling apparatus 32 for milling the ink, a density separator 34 and a holding container 36, which are fluidly connected thereby allowing ink to flow from the milling apparatus 32 to the holding container 36 via the density separator 34. As the ink flows through the density separator 34, contaminant particles that are more dense than the catalyst particles are separated from the flow of ink. Such contaminant particles are retained in a particle trap in the density separator, which can be removed and cleaned as necessary. The holding container 36 may comprise a stirrer 44 to help maintain a uniform dispersion. The system 30 further comprises a recirculation loop for recirculating a flow of ink from the holding chamber 36 to the milling apparatus 32. A pump 38 is suitably provided to control the flow rate of the ink. Optionally, valves 40, 42 may be provided at desired positions along the flow path. For example, a valve 40 may be positioned upstream of the density separator, and/or a valve 42 may be provided downstream of the density separator to assist with servicing, maintenance and cleaning of the milling system 30, in particular the density separator 34.

The positioning of the pump 38 and the density separator 34 is not particularly limited. For example, the density separator can be positioned downstream of the holding containing 36 and upstream of the milling apparatus 32 (e.g. in the recirculation loop). Optionally, the pump can be positioned downstream of the milling apparatus 32 and upstream of the holding container 36.

In some embodiments, the system 30 may further comprise a coating device (not shown in Figure 2). The coating device can be fluidly coupled to the milling system 30 so that the milled ink can be coated directly onto a substrate. Preferably, the coating device is positioned downstream of the density separator.

In operation, a flow of ink is pumped through the milling apparatus 32 and through the density separator 34. The density separator 34 is configured to separate contaminant particles from the flow of ink, where the contaminant particles are more dense than the catalyst particles. The ink may be recirculated around the milling system 30 as many times as desired, for example at least twice and preferably up to about 50 times. After the milling process is complete, the ink can be coated onto a substrate and then dried to form a catalyst-containing layer suitable for use in an electrochemical device, such as a fuel cell or an electrolyser. Suitably, the catalyst-containing layer is an electrocatalyst layer for a fuel cell or electrolyser.

Since the density separator 34 collects the contaminant particles, fewer contaminant deposits accumulate in other parts of the milling system 30. The contaminant particles can be collected and removed from the density separator 34 without needing to perform a length extended clean of the entire milling system. As such, the frequency of needing to perform lengthy extended cleans on the entire milling system 30 is reduced.

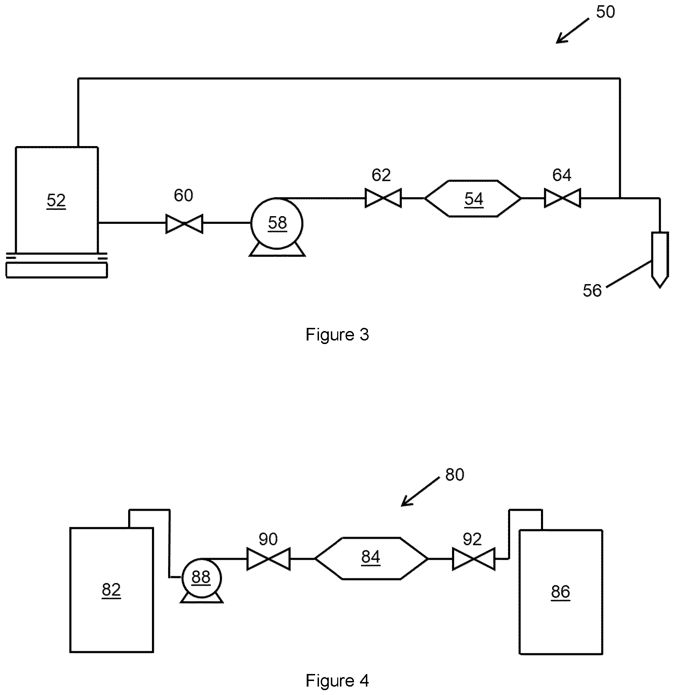

In a further embodiment, the density separator can be comprised in an ink coating system for producing a catalyst-containing layer. Figure 3 shows an ink coating system 50 comprising a density separator (e.g. of the type described in relation to Figure 1).

The ink coating system 50 comprises an ink container 52, a density separator 54 and a coating device 56, which are fluidly connected thereby allowing ink to flow from the ink container 52 to the coating device 56 via the density separator 54. As the ink flows through the density separator 54, contaminant particles that are more dense than the catalyst particles are separated from the flow of ink. Such contaminant particles are retained in a particle trap in the density separator, which can be removed and cleaned as necessary. The coating device 56 suitably comprises a coating nozzle for dispensing the ink. The coating device is suitable a slot die coater, spray coater or the like. Preferably, a pump 58 is provided to allow the ink to be metered as required.

The system 50 further comprises a recirculation loop for allowing excess catalyst ink to be returned to the ink container 52 via a recycle stream. The system may further comprise valves 60, 62, 64 positioned at desired locations along the flow path. For example, valve 60 may be positioned upstream of the pump 58. Valve 62 may be positioned upstream of the density separator, and valve 64 may be positioned downstream of the density separator, which may assist with servicing, maintenance and cleaning of the ink coating system 50, in particular the density separator 54.

The positioning of the density separator 54 and pump 58 is not particularly limited. For example, the density separator 54 can be positioned in the recycle stream (i.e. in the recirculation loop). Optionally, the pump 58 can be position in the recycle stream (i.e. in the recirculation loop).

In operation, a flow of ink is pumped round the ink coating system 50 and through the density separator 54 prior to being dispensed onto a substrate via the coating device 56. The density separator 54 is configured to separate contaminant particles from the flow of ink, where the contaminant particles are more dense than the catalyst particles. The ink may be recirculated around the ink coating system 50 as many times as desired, for example suitably at least twice and preferably up to about 50 times.

The ink that is coated onto the substrate suitably forms a catalyst-containing layer suitable for use in an electrochemical device, such as a fuel cell or an electrolyser. Suitably, the catalyst-containing layer is an electrocatalyst layer for a fuel cell or electrolyser. The substrate can be a carrier substrate, a decal transfer substrate, a gas diffusion layer, or an ion-conducting membrane.

Since the density separator 54 collects the contaminant particles, fewer contaminant deposits accumulate in other parts of the system 50. The contaminant particles can be collected and removed from the density separator 54 without needing to perform a length extended clean of the entire ink coating system. As such, the frequency of needing to perform lengthy extended cleans on the entire ink coating system 50 is reduced.

### Subsequent steps

After the flow of ink has been conveyed through the density separator, the ink is coated onto a substrate. The substrate can be a carrier sheet, a decal transfer substrate, a gas diffusion layer, or an ion-conducting membrane. Preferably, the substrate is an ion-conducting membrane. The ink can be coated onto the substrate using any suitable method, such as slot die (slot, extrusion) coating, spray coating, gravure coating, screen printing, rotary screen printing, inkjet printing, painting, bar coating, pad coating, gap coating techniques such as knife or doctor blade over roll (whereby the ink is applied to the substrate then passes through a split between the knife and a support roller), metering rod application such as with a Meyer bar, or laser induced forward transfer (LIFT).

The ink is typically coated onto the substrate as a layer of ink. The layer of ink can be dried, for example at an elevated temperature, such as ≥60 °C, to form a (dried) catalyst-containing layer. Preferably, the catalyst-containing layer is an electrocatalyst layer.

The method can further comprise the subsequent step of applying an ion-conducting membrane to the catalyst-containing layer.

The method can further comprise the subsequent step of applying a gas diffusion layer to the catalyst-containing layer.

Methods of the present disclosure are suitable for manufacturing a catalyst-coated membrane comprising an ion-conducting membrane (e.g. polymer electrolyte membrane) and at least one catalyst-containing layer applied to a face thereof. Methods of the present disclosure are also suitable for manufacturing a gas diffusion electrode comprising a gas diffusion layer and the catalyst-containing layer applied to a face thereof. Methods of the present disclosure are also suitable for manufacturing a membrane electrode assembly comprising, in order, a first gas diffusion layer (or porous transport layer), a first catalyst-containing layer, an ion-conducting layer (i.e. polymer electrolyte membrane), a second catalyst-containing layer, and a second gas diffusion layer).

### Examples

### Example 1

A catalyst ink was prepared comprising a ~50 wt.% Pt/C catalyst (commercially available from Johnson Matthey), an ionomer and an alcohol/water solvent mix with a total solids content of ~14 wt.%. An amount of dense metal particles having a particle diameter in the range of 1-200 µm were added to the ink to form a contaminated ink.

The ink was passed through a density separator up to 27 times using a peristaltic pump at a constant flow rate using the arrangement 80 shown schematically in Figure 4. The arrangement 80 comprised a first ink container 82, a peristaltic pump 88, a first valve 90, a density separator 84, a second valve 92, and a second ink container 86 fluidly connected in series. Samples of the ink were taken after a pre-determined number of passes through the density separator. The composition of the ink was analysed, and the ink was coated onto a proton exchange membrane as a substrate using a slot die coating process to form a catalyst layer. The target layer loading of the Pt/C catalyst was about 0.6 mg_{Pt}/cm². The layer of ink was then dried to form a catalyst-containing layer. In each case the dried catalyst layer was inspected under an optical microscope and the percentage area of defects determined.

After the trial the ink processing equipment was examined to monitor for the accumulation of contaminant particles at various locations, including in the settling chamber of the density separator and in the valve immediately downstream of the density separator.

### Comparative Example 1

The contaminated ink of Example 1 was coated onto the same type of proton exchange membrane as a substrate in the same manner as described for Example 1, except that the contaminated ink was not passed through a density separator. The target layer loading of the Pt/C catalyst was about 0.6 mg_{Pt}/cm². The layer of ink was then dried to form a catalyst-containing layer. The dried catalyst layer was inspected under an optical microscope and the percentage area of defects determined.

### Determining percentage area of defects

The percentage defect area corresponds to the area of defects as a percentage of the total area of the catalyst layer. The percentage defect area can be determined by imaging (e.g. photographing) a representative area of the catalyst layer. Defects are observable as bright regions. The area of bright regions (and hence the area of defects) as a percentage of the total area of each image is measured using image analysis techniques. The mean average value from all images is representative of the percentage defect area.

### Results and discussion

Where the ink is not passed through the density separator, the added dense metal contaminants were found to accumulate on fittings in the ink processing apparatus. In contrast, in the examples where the ink was passed through the density separator, minimal amounts of dense metal deposits were observed at locations downstream of the density separator (e.g. in a valve positioned immediately downstream of the density separator). A significant proportion of the added dense metal contaminants had accumulated in the particle trap of the density separator. The accumulated dense metal deposits can be easily removed from the particle trap without having to perform a full extended clean of the entire ink processing apparatus. Consequently, any machine downtime for cleaning is reduced.

Analysis of the composition of the ink suggested that the Pt/C catalyst and ionomer content of the ink did not materially change after passing the contaminated ink through the density separator 27 times. Therefore, the method provided selective separation of dense contaminants from the ink, while the less dense catalyst and ionomer components were retained in the ink.

The catalyst layer produced in accordance with Comparative Example 1 (i.e. no passes through a density separator) had a percentage defect area of about 1.9%. In contrast, when the contaminated catalyst ink was passed through a density separator, the percentage defect area decreased. The catalyst layer produced in accordance with Example 1 after a single pass through the density separator had a percentage defect area of about 1.5%. The number of passes through the density separator generally correlated to a lower percentage defect area at a fixed catalyst layer loading and resulted in a higher quality catalyst layer.

## Claims

1. A method of producing a catalyst-containing layer for an electrochemical device, the method comprising the steps of:
providing a flow of ink, the ink comprising catalyst particles, an ion-conducting polymer and a liquid medium;
conveying the flow of ink through a density separator configured to separate contaminant particles from the flow of ink, wherein the contaminant particles are more dense than the catalyst particles; and then
coating the ink onto a substrate.

2. A method according to claim 1, wherein the flow of ink has a substantially laminar flow while flowing through the density separator.

3. A method according to claim 1 or 2, wherein the flow of ink has a first flow speed prior to entering the density separator, and a second flow speed while the ink flows through the density separator, wherein the second flow speed is slower than the first flow speed.

4. A method according to any previous claim, wherein the density separator is a settling chamber, preferably a gravitational settling chamber.

5. A method according to any previous claim, wherein the density separator comprises an expansion chamber.

6. A method according to any previous claim, wherein the flow of ink is conveyed through the density separator a plurality of times, preferably at least 5 times, prior to the step of coating the ink onto the substrate.

7. A method according to any previous claim, wherein the method further comprises milling the ink using a milling apparatus, and then conveying the flow of ink from the milling apparatus to the density separator.

8. A method according to claim 7, wherein the method comprises recirculating the flow of ink through the milling apparatus via the density separator.

9. A method according to any previous claim, wherein the substrate is an ion-conducting membrane.

10. A method according to any previous claim, wherein the catalyst-containing layer is an electrocatalyst layer.

11. A method according to any previous claim, further comprising the subsequent step(s) of:
(a) applying an ion-conducting membrane to the catalyst-containing layer; and/or
(b) applying a gas diffusion layer or a porous transport layer to the catalyst-containing layer.

12. A continuous milling system comprising:
a milling apparatus for milling an ink comprising catalyst particles, an ion-conducting polymer, and a liquid medium;
a density separator; and
a recirculation loop for recirculating a flow of the ink through the milling device via the density separator,
wherein the density separator is configured to separate contaminant particles from the flow of ink, wherein the contaminant particles are more dense than the catalyst particles.

13. An ink coating system for producing a catalyst-containing layer, the ink coating system comprising:
an ink container for an ink;
a density separator configured to separate contaminant particles from a flow of ink, wherein the contaminant particles are more dense than the catalyst particles; and
a coating device comprising an ink dispenser for depositing the catalyst ink onto a substrate;
wherein the density separator is fluidly connected to the ink container and downstream of the ink container, and the coating device is fluidly connected to the density separator and downstream of the density separator.
